# EUROPEAN PATENT APPLICATION

(11) **EP 4 840 989 A1**
(43) Date of publication of application: **18.11.2026**
(21) Application number: 26177469.9
(22) Date of filing: 08.05.2026
(51) Int. Cl.: C25B 1/04, C25B 9/19, C25B 9/60, C25B 9/77, H01M 8/0276

(54) **GASKET AND CELL STRUCTURE**

(30) Priority: 16.05.2025 JP 2025082969
(71) Applicant: NOK Corporation, Minato-ku Tokyo 105-8585 (JP)
(72) Inventor: MIYAKE, Ryo, Fukushima-shi, Fukushima, 9601193 (JP); KAWAI, Tomohiro, Fukushima-shi, Fukushima, 9601193 (JP); INOUE, Naoya, Fukushima-shi, Fukushima, 9601193 (JP)
(74) Representative: Global IP Europe Patentanwaltskanzlei

(57) **Abstract**

To suppress a decline in sealing performance caused by a space to be sealed reaching high pressure. A gasket 2 comprises a gasket member 10 with an annular shape formed from an elastic material and a backup ring 30 with an annular shape. The gasket member 10 has a seal side surface 11 and a contact side surface 12 with annular shapes that form a pair facing away from each other, and a plurality of through-holes 16 penetrating between the seal side surface 11 and the contact side surface 12. The gasket member 10 has a first seal portion 13 and a second seal portion 14 for sealing an anode chamber S1 or a cathode chamber S2, and a third seal portion 15 formed on the seal side surface 11 on an outer periphery side relative to the first seal portion 13 and the second seal portion 14 for sealing the plurality of through-holes 16. The backup ring 30 is configured to be attachable to the gasket member 10 on the seal side surface 11 so as to be able to contact the third seal portion 15 from an opposite side to a side of a subject to be sealed by the third seal portion 15.

## Description

### [Technical Field]

The present invention relates to a gasket and a cell structure.

### [Background Art]

Each cell in a hydrogen generator or a fuel cell is provided with a gasket and a separator, and the gasket and the separator constitute the cell as a cell structure. The gasket is compressed between each of an anode-side separator and a cathode-side separator and an electrolyte membrane, seals a space between each separator and the electrolyte membrane, prevents leakage of fluid inside the spaces inside the cell, and also prevents mixing of fluids inside each space (for example, refer to Patent Literature 1).

### [Citation List]

### [Patent Literature]

[Patent Literature 1]
Japanese Patent Laid-Open No. 2012-117140

### [Summary of Invention]

### [Technical Problem]

In a water electrolysis device of a hydrogen generator, since an inside of a cell that is a space to be sealed reaches high pressure, the gasket may deform or shift, causing sealing performance to decline. For this reason, the cells of a hydrogen generator must be configured to be capable of maintaining the sealing performance of the gasket even when the inside of the cells reaches high pressure.

The present invention has been made in consideration of the problem described above and an object thereof is to provide a gasket and a cell structure capable of suppressing a decline in sealing performance caused by a space to be sealed reaching high pressure.

### [Solution to Problem]

To achieve the object described above, a gasket according to the present invention is a gasket for sealing a space between each of a pair of members facing each other and an intermediate member facing each of the pair of members in the facing direction, wherein the gaskets is configured such that one of the gaskets is inverted and superimposed on another one of the gaskets to seal the space, the gaskets comprise: a gasket member that is an annular member formed from an elastic material; and a backup ring that is an annular member, the gasket member has: a seal side surface and a contact side surface that are a pair of annular surfaces facing away from each other, a plurality of through-holes penetrating between the seal side surface and the contact side surface, a first seal portion and a second seal portion for sealing the space, and a third seal portion formed on the seal side surface on an outer periphery side relative to the first seal portion and the second seal portion for sealing the plurality of through-holes, and the backup ring is configured to be attachable to the gasket member on the seal side surface so as to be able to contact the third seal portion from an opposite side to a side of a subject to be sealed by the third seal portion.

In a gasket according to an aspect of the present invention, the backup ring extends along the third seal portion on the opposite side.

In a gasket according to an aspect of the present invention, the plurality of through-holes of the gasket member include one pair of the through-holes and another pair of the through-holes, and the backup ring is configured to extend to an outer periphery side of the one pair of through-holes and to enclose each of the other pair of through-holes.

In a gasket according to an aspect of the present invention, the backup ring has an engagement portion, the gasket member has an engaged portion on the seal side surface, and the engagement portion of the backup ring and the engaged portion of the gasket member are configured to be engageable with each other.

In a gasket according to an aspect of the present invention, the gasket member has a recessed portion corresponding to the backup ring and the recessed portion is recessed toward the contact side surface on the seal side surface.

In a gasket according to an aspect of the present invention, the gasket member has a projecting portion on the seal side surface that is a portion protruding in a direction in which the seal side surface faces, the projecting portion extends annularly so as to enclose the plurality of through-holes from an outer periphery side, and the recessed portion is formed between the projecting portion and the third seal portion.

In a gasket according to an aspect of the present invention, the backup ring is made of resin or metal.

In a gasket according to an aspect of the present invention, the backup ring is configured so as not to protrude further than the first seal portion and the third seal portion in the direction in which the seal side surface faces.

In a gasket according to an aspect of the present invention, the plurality of through-holes of the gasket member include one pair of the through-holes and another pair of the through-holes, and the third seal portion has a seal portion extending annularly to enclose the one pair of the through-holes from an outer periphery side and a seal portion extending annularly to enclose each of the other pair of the through-holes.

To achieve the object described above, a cell structure according to the present invention comprises: a gasket that is an annular member formed from an elastic material; and a separator that is a member extending along a plane, wherein the gasket has: a seal side surface and a contact side surface that are a pair of annular surfaces facing away from each other, a plurality of through-holes penetrating between the seal side surface and the contact side surface, a first seal portion and a second seal portion for sealing the space, and a third seal portion formed on the seal side surface on an outer periphery side relative to the first seal portion and the second seal portion for sealing the plurality of through-holes, the separator has: a first surface and a second surface that are a pair of surfaces facing away from each other, a plurality of through-holes corresponding to each of the plurality of through-holes of the gasket and penetrating between the first surface and the second surface, and a backup ring portion, the first seal portion and the third seal portion of the gasket are configured to contact the first surface of the separator, and the backup ring portion is configured so as to be able to contact the third seal portion contacting the first surface from an opposite side to a side of a subject to be sealed by the third seal portion.

In a cell structure according to an aspect of the present invention, the backup ring portion is configured to extend along the third seal portion contacting the first surface on the opposite side.

In a cell structure according to an aspect of the present invention, the plurality of through-holes of the separator include one pair of the through-holes and another pair of the through-holes, and the backup ring portion is configured to extend to an outer periphery side of the one pair of through-holes and to enclose each of the other pair of through-holes.

In a cell structure according to an aspect of the present invention, the gasket has a recessed portion capable of accommodating the backup ring portion, and the recessed portion is recessed toward the contact side surface on the seal side surface.

In a cell structure according to an aspect of the present invention, the gasket has a projecting portion on the seal side surface that is a portion protruding in a direction in which the seal side surface faces, the projecting portion extends annularly so as to enclose the plurality of through-holes from an outer periphery side, and the recessed portion is formed between the projecting portion and the third seal portion.

In a cell structure according to an aspect of the present invention, the plurality of through-holes of the gasket include one pair of the through-holes and another pair of the through-holes, and the third seal portion has a seal portion extending annularly to enclose the one pair of the through-holes from an outer periphery side and a seal portion extending annularly to enclose each of the other pair of the through-holes.

In a cell structure according to an aspect of the present invention, the plurality of through-holes of the separator include one pair of the through-holes and another pair of the through-holes, and the first surface is configured to enable the one pair of the through-holes to communicate with each other on an inner side relative to a portion where the third seal portion contacts.

### [Advantageous Effect of Invention]

According to the gasket and the cell structure of the present invention, a decline in sealing performance caused by a space to be sealed reaching high pressure can be suppressed.

### [Brief Description of Drawings]

[Fig. 1] Fig. 1 is a partial sectional view schematically showing a water electrolysis device comprising a gasket according to an embodiment of the present invention.
[Fig. 2] Fig. 2 is a front view of a gasket device.
[Fig. 3] Fig. 3 is a sectional view showing a cross-section taken along line A-A in Fig. 2.
[Fig. 4] Fig. 4 is a sectional view showing a cross-section taken along line B1-B1 or line B2-B2 in Fig. 2.
[Fig. 5] Fig. 5 is a sectional perspective view showing the cross-section in Fig. 4.
[Fig. 6] Fig. 6 is a sectional view showing a cross-section taken along line C1-C1 or line C2-C2 in Fig. 2.
[Fig. 7] Fig. 7 is a front view of a gasket member.
[Fig. 8] Fig. 8 is a rear view of the gasket member.
[Fig. 9] Fig. 9 is a front view of a backup ring included in the gasket member.
[Fig. 10] Fig. 10 is a front view of a gasket provided in a cell structure according to the embodiment of the present invention.
[Fig. 11] Fig. 11 is a front view of a separator provided in a cell structure according to the embodiment of the present invention.
[Fig. 12] Fig. 12 is a partial sectional view schematically showing a water electrolysis device comprising the cell structure to an embodiment of the present invention.

### [Description of Embodiment]

Hereinafter, an embodiment of the present invention will be described with reference to the drawings. Note that in the drawings, reference signs may not be assigned to all of the plurality of components, and reference signs of a part of the plurality of components may be omitted.

A gasket according to the present invention is a gasket for sealing a space between each of a pair of members facing each other and an intermediate member facing each of the pair of members in the direction in which the pair of members face each other. The pair of members facing each other and the intermediate member are, for example, a pair of separators and an electrolyte membrane used in a cell of a hydrogen generator, a fuel cell, or the like. As an example, the gasket according to the embodiment of the present invention is intended to seal a space between a pair of separators facing each other and an electrolyte membrane in a cell of a water electrolysis device of a hydrogen generator. In addition, a cell structure according to the present invention is a component forming a cell that is a smallest constituent unit of a device and is, for example, a component forming a cell of a hydrogen generator, a fuel cell, or the like. Note that an object of application of the gasket and the cell structure according to the present invention is not limited thereto and may include other objects of application. In addition, the water electrolysis device that is the object of application of the present invention is not limited to a water electrolysis device having a membrane assembly to be described later and includes so-called zero-gap water electrolysis devices.

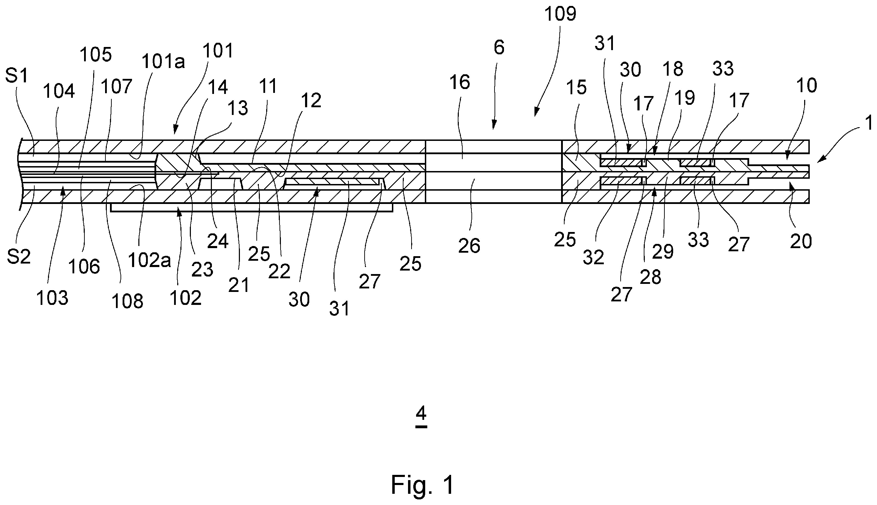

Fig. 1 is a partial sectional view schematically showing a water electrolysis device 4 comprising gaskets 2 according to the embodiment of the present invention. The water electrolysis device 4 comprises the gaskets 2. The gaskets 2 are configured to be used by inverting and superimposing, on one of the gaskets 2, another one of the gaskets 2 (a gasket 3). As shown in Fig. 1, the gaskets 2 are configured to seal, in a cell 100 of the water electrolysis device 4, a space S1 between one separator 101 of the pair of separators and an electrolyte membrane 104 of a membrane assembly 103 that is an intermediate member and a space S2 between another separator 102 of the pair of separators and the electrolyte membrane 104. Each gasket 2 comprises a gasket member 10 that is an annular member formed from an elastic material and a backup ring 30 that is an annular member. The gasket member 10 has a seal side surface 11 and a contact side surface 12 that are a pair of annular surfaces facing away from each other, and a plurality of through-holes 16 penetrating between the seal side surface 11 and the contact side surface 12. In addition, the gasket member 10 has a first seal portion 13 and a second seal portion 14 for sealing the space S1 or the space S2, and a third seal portion 15 formed on the seal side surface 11 on an outer periphery side relative to the first seal portion 13 and the second seal portion 14 for sealing the plurality of through-holes 16. The backup ring 30 is configured to be attachable to the gasket member 10 on the seal side surface 11 so as to be able to contact the third seal portion 15 from an opposite side to a side of a subject to be sealed by the third seal portion 15. Hereinafter, a configuration of the gaskets 2 will be specifically described.

As shown in Fig. 1, the second seal portion 14 is formed by an end portion on an inner periphery side of the contact side surface 12 and configured such that, when another gasket 2 (the gasket 3) is inverted and superimposed on one gasket 2, the second seal portion 14 of the gasket member 10 of the one gasket 2 faces the second seal portion 14 of the gasket member 10 of the other gasket 2 in a direction of inversion and faces an end portion on an outer periphery side of the electrolyte membrane 104. Note that an annular gap opened to the inner periphery side may be configured to be formed between the second seal portion 14 of the gasket member 10 of the one gasket 2 and the second seal portion 14 of the gasket member 10 of the other gasket 2. In this case, the end portion on the outer periphery side of the electrolyte membrane 104 can be accommodated in the gap. A facing direction refers to a direction in which the separator 101 and the separator 102 face each other in the cell 100. The direction of inversion coincides with the facing direction in the cell 100. Therefore, hereinafter, the direction of inversion may also be referred to as the facing direction.

The through-holes 16 penetrate between the seal side surface 11 and the contact side surface 12 and the gasket member 10 includes at least two pairs of through-holes 16. When inverting and superimposing the other gasket 2 on the one gasket 2, one of the pair of through-holes 16 of the gasket member 10 of the one gasket 2 is configured to be superimposed on another of the pair of through-holes 16 of the gasket member 10 of the other gasket 2 in the facing direction. In addition, when inverting and superimposing the other gasket 2 on the one gasket 2, a portion further on the outer periphery side relative to the second seal portion 14 of the contact side surface 12 of the gasket member 10 of the one gasket 2 is configured to be superimposed on a portion further on the outer periphery side relative to the second seal portion 14 of the contact side surface 12 of the gasket member 10 of the other gasket 2 in the facing direction.

Hereinafter, the gaskets 2 described above will be described in greater detail. As shown in Fig. 1, one of the gaskets 2 and another one of the gaskets 2 form a gasket device 1. Hereinafter, the one gasket 2 will be referred to as a first gasket 2 and the other gasket 2 will be referred to as a second gasket 3. In addition, the gasket member 10 included in the second gasket 3 will be referred to as a gasket member 20.

As shown in Fig. 1, in the cell 100, the gasket device 1 is provided between one separator 101 of the pair of separators and the electrolyte membrane 104 of the membrane assembly 103 that is an intermediate member and between another separator 102 of the pair of separators and the electrolyte membrane 104 and seals the space S1 between the separator 101 and the electrolyte membrane 104 and the space S2 between the separator 102 and the electrolyte membrane 104. As shown in Fig. 1, the gasket device 1 is provided with the first gasket 2 that is annular and the second gasket 3 that is annular. As described above, the second gasket 3 is the gasket 2 and is the same as the first gasket 2. The first gasket 2 seals the space S1 and the second gasket 3 seals the space S2. Hereinafter, a configuration of the gasket device 1 will be specifically described.

As shown in Fig. 1, in the cell 100 of the water electrolysis device 4, the membrane assembly 103 has the electrolyte membrane 104 and a pair of catalytic layers made up of an anode catalytic layer 105 that is an electrode on an anode side and a cathode catalytic layer 106 that is an electrode on a cathode side provided on both surfaces of the electrolyte membrane 104, respectively. The electrolyte membrane 104 is, for example, an ion exchange membrane and, specifically, a solid polymer electrolyte membrane. Gas diffusion layers 107 and 108 are provided on surfaces of the anode catalytic layer 105 and the cathode catalytic layer 106, respectively. As shown in Fig. 1, in the cell 100, a space inside the cell 100 is divided into two spaces S1 and S2 by the electrolyte membrane 104, and an anode chamber S1 is formed between the separator 101 and the electrolyte membrane 104 and a cathode chamber S2 is formed between the separator 102 and the electrolyte membrane 104, respectively. The anode chamber S1 and the cathode chamber S2 are spaces to be sealed of the gasket device 1 and, as shown in Fig. 1, sealing of the anode chamber S1 is achieved by the first gasket 2 and sealing of the cathode chamber S2 is achieved by the second gasket 3, respectively. The anode catalytic layer 105 and the gas diffusion layer 107 are present inside the anode chamber S1 and the cathode catalytic layer 106 and the gas diffusion layer 108 are present inside the cathode chamber S2, respectively. For example, the water electrolysis device 4 comprises a plurality of the cells 100, and the plurality of cells 100 are stacked and held by being compressed in a stack direction. Note that the water electrolysis device 4 may be formed by a single cell 100.

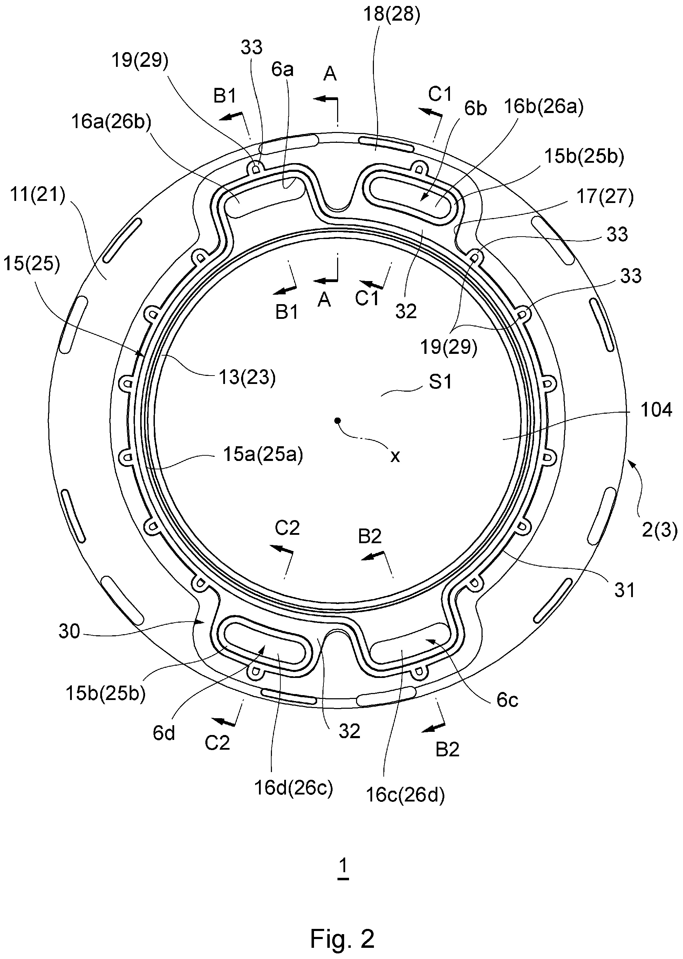

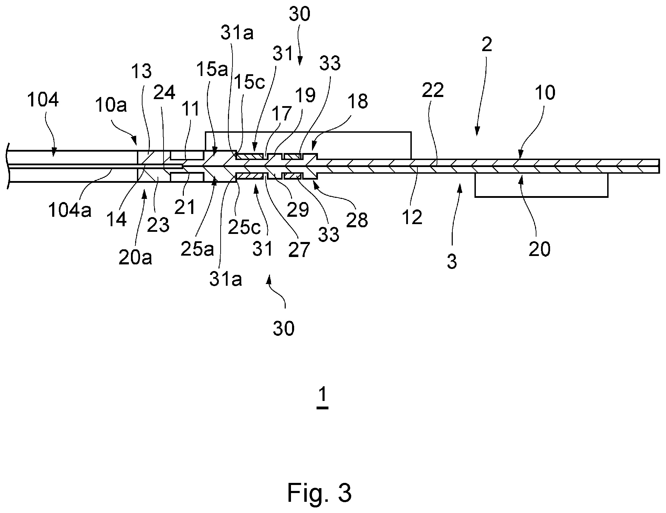

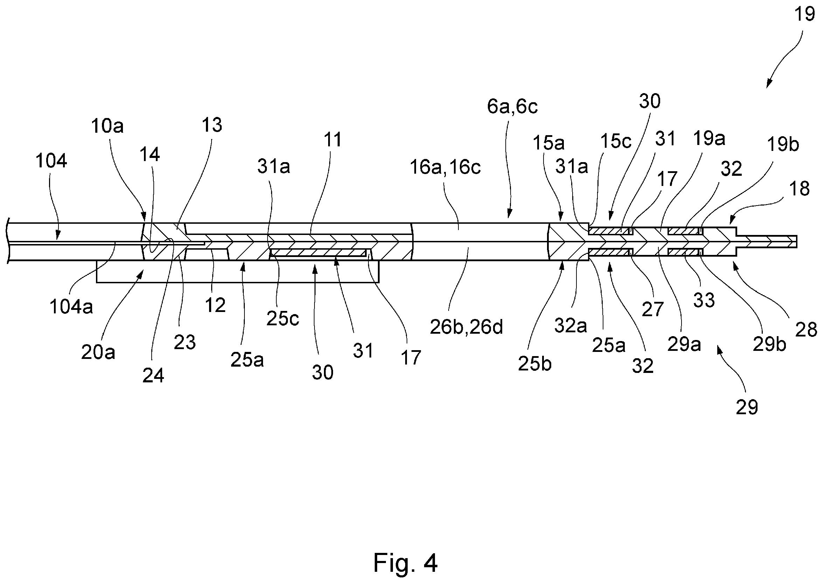

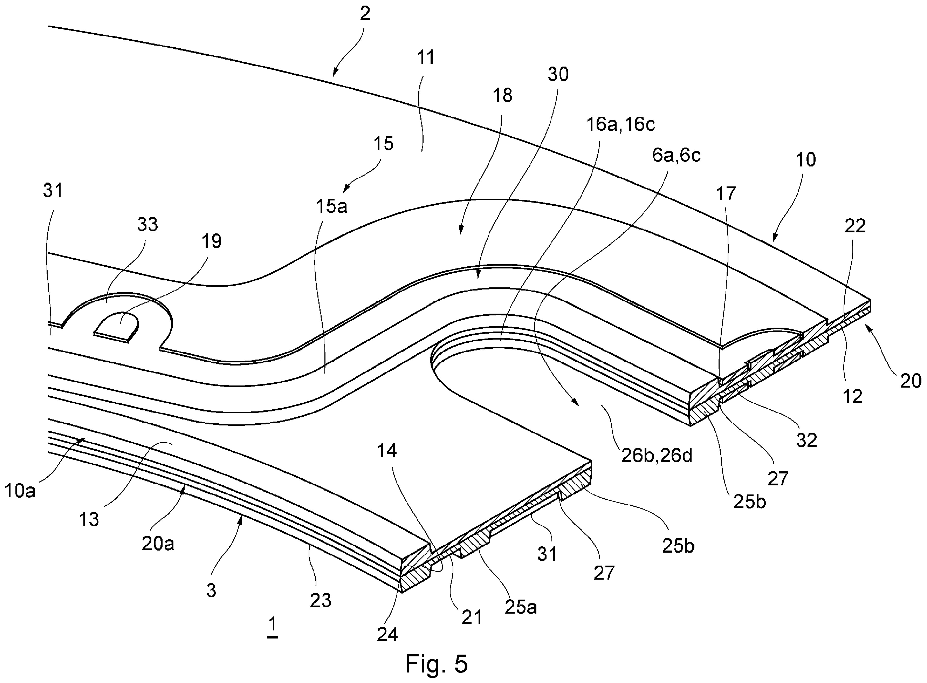

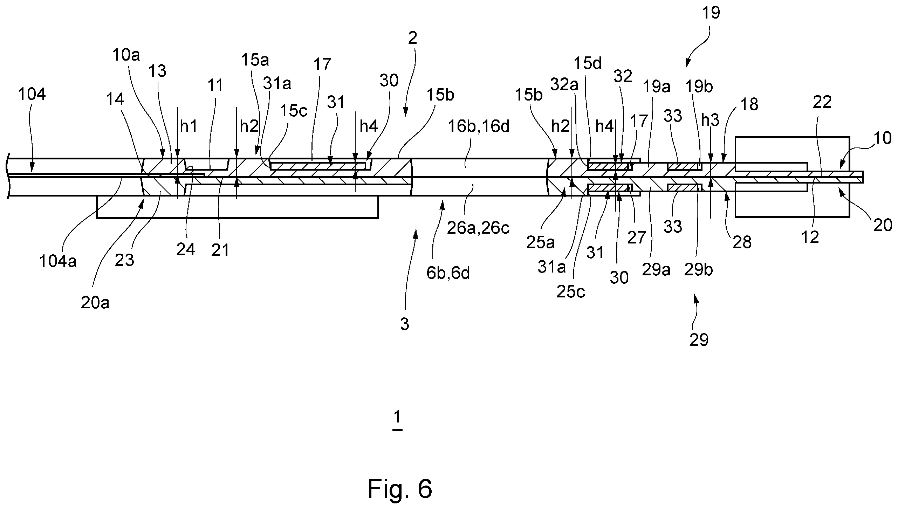

Fig. 2 is a front view of the gasket device 1; Fig. 3 is a sectional view showing a cross-section taken along line A-A in Fig. 2; Fig. 4 is a sectional view showing a cross-section taken along line B1-B1 or line B2-B2 in Fig. 2; Fig. 5 is a sectional perspective view showing the cross-section of Fig. 4; and Fig. 6 is a sectional view showing a cross-section taken along line C1-C1 or line C2-C2 in Fig. 2. Figs. 2 to 4 and 6 show the gasket device 1 in an assembled state in which the first gasket 2 and the second gasket 3 are assembled and the electrolyte membrane 104 is assembled between the first gasket 2 and the second gasket 3. Illustration of the electrolyte membrane 104 is omitted in Fig. 5. Note that in Fig. 2, reference signs in parentheses indicate corresponding components of the first gasket 2 or the second gasket 3 on the opposite side. In addition, illustrations of the anode catalytic layer 105, the cathode catalytic layer 106, and the gas diffusion layers 107 and 108 are omitted in Figs. 2 to 6. As shown in Figs. 2 to 6, the gasket device 1 has an annular shape along a plane.

As shown in Fig. 2, for example, the gasket device 1 has four through-holes 6a, 6b, 6c, and 6d. The through-holes 6a, 6b, 6c, and 6d each penetrate the first gasket 2 and the second gasket 3. Each of the through-holes 6a, 6b, 6c, and 6d is a part of a plurality of flow paths 109 of the cell 100. In the cell 100, the through-holes 6a to 6d are passages for supplying an electrolytic solution to the anode chamber S1 or the cathode chamber S2 or passages for discharging products generated in the anode chamber S1 or the cathode chamber S2 to outside the cell 100. For example, the through-hole 6a is a supply path for supplying an electrolytic solution to the anode chamber S1 and the through-hole 6b is a supply path for supplying an electrolytic solution to the cathode chamber S2. In addition, the through-hole 6c is a discharge path for discharging products generated in the anode chamber S1 to outside the cell 100 and the through-hole 6d is a discharge path for discharging products generated in the cathode chamber S2 to outside the cell 100. Note that the electrolytic solutions supplied from the through-holes 6a and 6b may be the same or may differ from each other. For example, the cell 100 is an alkaline water electrolysis device and an alkaline aqueous solution is used as the electrolytic solution. While the alkaline aqueous solution is not limited to any specific aqueous solution, examples include aqueous solutions of KOH, NaOH, K₂CO₃, KHCO₃, Na₂CO₃, and NaHCO₃. For example, the cell 100 may be a PEM water electrolysis device. In this case, pure water is supplied to the anode chamber S1. In addition, gases generated in the anode chamber S1 and the cathode chamber S2 are oxygen and hydrogen, respectively. Note that electrolytic solutions may be discharged together with the products from the anode chamber S1 and the cathode chamber S2 via the through-holes 6c and 6d, respectively.

As shown in Figs. 1 and 3 to 6, in the gasket device 1 in the assembled state, a part of the contact side surface 12 of the gasket member 10 of the first gasket 2 and a part of the contact side surface 22 of the gasket member 20 of the second gasket 3 contact each other. Note that the gasket device 1 in the assembled state shown in Figs. 3 to 6 is in a free state and no external force acts on the gasket device 1. In addition, an end portion 104a on an outer periphery side of the electrolyte membrane 104 is sandwiched between the second seal portion 14 on an inner periphery side of the gasket member 10 of the first gasket 2 and a second seal portion 24 of the gasket member 20 of the second gasket 3. An accommodation space that is an annular space opened toward the inner periphery side may be formed between the second seal portion 14 and the second seal portion 24 and, in this case, the end portion 104a of the electrolyte membrane 104 is accommodated in the accommodation space.

In addition, as shown in Figs. 1, 2, and 4 to 6, the first gasket 2 has the backup ring 30 described earlier and the backup ring 30 is attached to the seal side surface 11 of the gasket member 10 of the first gasket 2. The second gasket 3 similarly has the backup ring 30, and the backup ring 30 is attached to a seal side surface 21 of the gasket member 20 of the second gasket 3. In the water electrolysis device 4, in each cell 100 compressed in the stack direction, as described later, the backup ring 30 of the first gasket 2 contacts the third seal portion 15 and imparts a self-sealing action to the third seal portion 15 and, similarly, the backup ring 30 of the second gasket 3 contacts a third seal portion 25 and imparts a self-sealing action to the third seal portion 25.

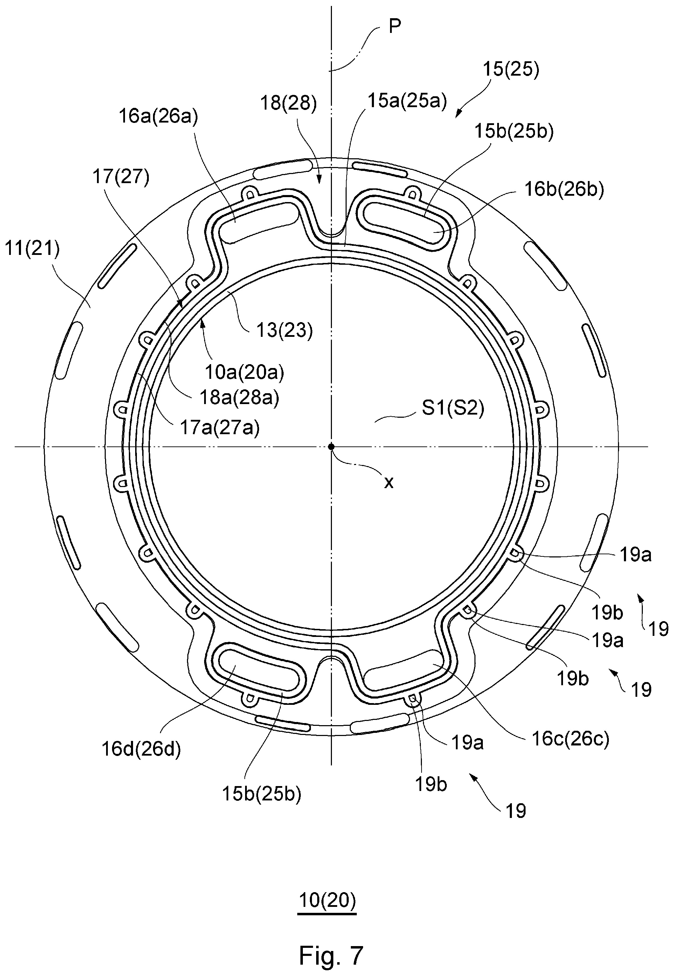

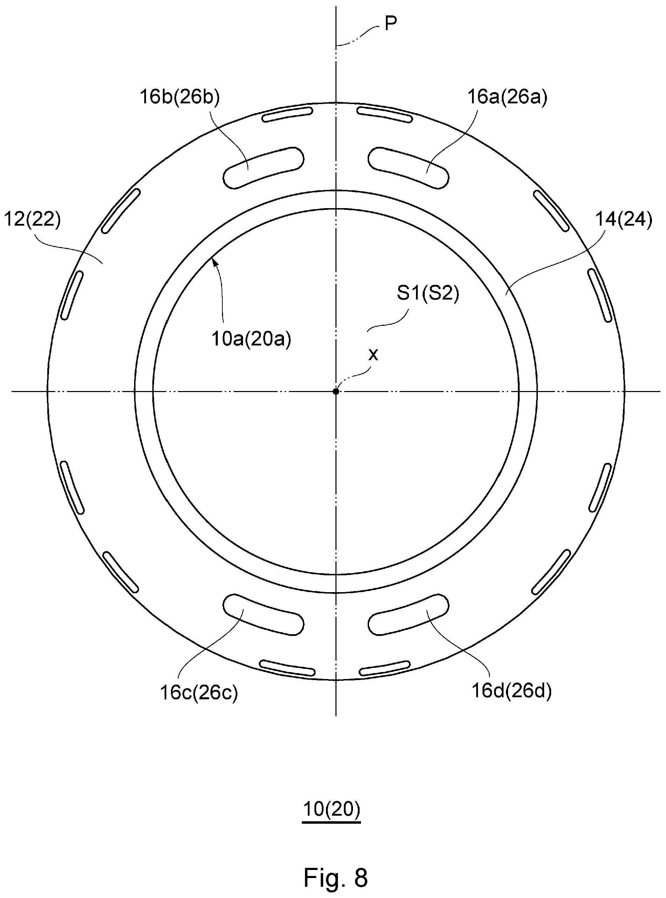

Next, a configuration of the gasket member 10 of the first gasket 2 will be specifically described. Fig. 7 is a front view of the gasket member 10 and Fig. 8 is a rear view of the gasket member 10. As shown in Figs. 7 and 8, the gasket member 10 has a shape corresponding to the gasket device 1 and has an annular shape along a plane. Specifically, the gasket member 10 has an axial line x that is a virtual line extending in the direction of inversion (facing direction) and has an annular shape around the axial line x along a plane perpendicular to the axial line x. A shape of an outer peripheral end of the gasket member 10 is, for example, a circular or substantially circular shape with the axial line x as a central axis as shown in Figs. 7 and 8. In addition, a shape of an inner peripheral end of the gasket member 10 is, for example, a circular or substantially circular shape as shown in Figs. 7 and 8. In other words, the shape of the anode chamber S1 is, for example, a circular or substantially circular shape when viewed in a direction of the axial line x. Note that the shape of the gasket member 10 is not limited to the shape described above, and the outer peripheral end may have another shape such as a rectangle and the inner peripheral end may have another shape such as a rectangle.

As shown in Figs. 1 to 8, the gasket member 10 has a plate shape and, as described above, has the seal side surface 11 and the contact side surface 12 that are a pair of annular surfaces facing away from each other. The seal side surface 11 is a surface on a front-face side and the contact side surface 12 is a surface on a rear-face side. For convenience of description, a side of a direction that the seal side surface 11 faces in the direction of the axial line x will be referred to as the front-face side and a side of a direction that the contact side surface 12 faces in the direction of the axial line x will be referred to as the rear-face side. In addition, the inner periphery side is an inner side with respect to a boundary of the annular shape and the outer periphery side is an outer side with respect to the boundary of the annular shape. The seal side surface 11 extends, for example, on a plane parallel to a plane perpendicular to the axial line x, and the contact side surface 12 extends, for example, on a plane parallel to a plane perpendicular to the axial line x. Specifically, the seal side surface 11 extends, for example, on a plane or substantially on a plane perpendicular to the axial line x, and the contact side surface 12 extends, for example, on a plane or substantially on a plane perpendicular to the axial line x.

As shown in Figs. 7 and 8, four through-holes 16a, 16b, 16c, and 16d that form the four through-holes 6a, 6b, 6c, and 6d of the gasket device 1 described above, respectively, are formed as the through-holes 16 in the gasket member 10. The through-holes 16a to 16d penetrate between the seal side surface 11 and the contact side surface 12. The through-holes 16a and 16b correspond to the through-holes 6a and 6b of the gasket device 1, respectively, and are openings for supplying an electrolytic solution to the anode chamber S1 and the cathode chamber S2, respectively, as described above. The through-holes 16c and 16d correspond to the through-holes 6c and 6d of the gasket device 1, respectively, and are openings for discharging products generated in the anode chamber S1 and the cathode chamber S2, respectively, to outside the cell 100 as described above. The through-hole 16a and the through-hole 16c form a pair, and the through-hole 16b and the through-hole 16d form a pair. Note that the through-holes 16c and 16d may correspond to the through-holes 6a and 6b of the gasket device 1, respectively, and may be openings for supplying an electrolytic solution to the anode chamber S1 and the cathode chamber S2, respectively, and the through-holes 16a and 16b may correspond to the through-holes 6c and 6d of the gasket device 1, respectively, and may be openings for discharging products generated in the anode chamber S1 and the cathode chamber S2, respectively, to outside the cell 100.

For example, as shown in Figs. 7 and 8, the through-holes 16a and 16b are provided such that respective center positions of the through-holes 16a and 16b are symmetrical or substantially symmetrical with respect to a symmetry plane P. In a similar manner, for example, as shown in Figs. 7 and 8, the through-holes 16c and 16d are provided such that respective center positions of the through-holes 16c and 16d are symmetrical or substantially symmetrical with respect to the symmetry plane P. In addition, for example, as shown in Figs. 7 and 8, the through-holes 16a and 16b on a supply side and the through-holes 16c and 16d on a discharge side face each other in a direction along the symmetry plane P, respectively. Note that the symmetry plane P is a plane that includes the axial line x and is a virtual plane. In addition, the through-hole 16a and the through-hole 16c have, for example, the same or substantially the same size (opening area) and shape, and the through-hole 16b and the through-hole 16d have, for example, the same or substantially the same size and shape. Note that the through-hole 16a and the through-hole 16c need not have the same or substantially the same size and shape, and the through-hole 16b and the through-hole 16d need not have the same or substantially the same size and shape. Furthermore, the through-hole 16a and the through-hole 16c may be rotationally symmetric with respect to the axial line x, and the through-hole 16b and the through-hole 16d may be rotationally symmetric with respect to the axial line x.

In addition, for example, as shown in Figs. 4 to 6, the size and the shape of the through-hole 16a are the same or substantially the same as the size and the shape of the through-hole 16b. Similarly, for example, as shown in Figs. 4 to 6, the size and the shape of the through-hole 16c are the same or substantially the same as the size and the shape of the through-hole 16d. Note that the size and the shape of the through-hole 16a need not be the same or substantially the same as the size and the shape of the through-hole 16b. Similarly, the size and the shape of the through-hole 16c need not be the same or substantially the same as the size and the shape of the through-hole 16d.

In addition, as shown in Figs. 1 to 7, the first seal portion 13 for sealing the anode chamber S1 described above is formed on the seal side surface 11. For example, the first seal portion 13 is made of a bead 13 protruding from the seal side surface 11. The bead 13 protrudes toward the front-face side from the seal side surface 11 and extends annularly along the seal side surface 11. The bead 13 is an annular closed bead. Furthermore, as shown in Fig. 7, the bead 13 is provided on the inner periphery side relative to the through-holes 16a to 16d. In other words, the through-holes 16a to 16d are outside a space enclosed by the bead 13 and are positioned on the outer periphery side relative to the bead 13. For example, as shown in Figs. 3 to 7, the bead 13 is provided at an end portion (inner periphery end portion 10a) on the inner periphery side relative to the gasket member 10. Furthermore, as shown in Figs. 3 to 6, the bead 13 is positioned back to back with the second seal portion 14 in the direction of the axial line x. For example, as shown in Fig. 7, the first seal portion 13 is made of a single bead 13. Note that the first seal portion 13 may be made up of two or more beads. In this case, for example, the plurality of beads are arranged parallel or substantially parallel to each other with spacing therebetween.

In addition, as shown in Fig. 7, the third seal portion 15 for sealing the through-holes 16a to 16d described above is formed on the seal side surface 11. As described above, in the cell 100, the first gasket 2 is a gasket that forms the anode chamber S1, and the third seal portion 15 of the gasket member 10 seals the flow path 109 communicating with the cathode chamber S2 with respect to the anode chamber S1. In other words, the third seal portion 15 seals, with respect to the anode chamber S1, the through-hole 16b included in the flow path 109 that supplies an electrolytic solution to the cathode chamber S2 and the through-hole 16d included in the flow path 109 that discharges products generated in the cathode chamber S2 to outside of the cell 100. Furthermore, the third seal portion 15 encloses the through-hole 16a and the through-hole 16c from the outer periphery side and seals the through-hole 16a and the through-hole 16c so that the through-hole 16a and the through-hole 16c can communicate with each other via the anode chamber S1.

As shown in Fig. 7, for example, the third seal portion 15 has a seal portion 15a that is a portion extending in an annular shape and enclosing one pair of through-holes 16a and 16c from the outer periphery side and a seal portion 15b that is a portion extending in an annular shape and enclosing each of another pair of through-holes 16b and 16d. The seal portion 15a and the seal portion 15b are separate bodies. Note that the seal portion 15a and the seal portion 15b may be integrated. The third seal portion 15 is made of, for example, the bead 15 protruding from the seal side surface 11, the seal portions 15a and 15b are made up of beads 15a and 15b protruding from the seal side surface 11, respectively, and the bead 15b is formed at two locations. Specifically, as shown in Fig. 7, the bead 15a has an annular shape and encloses the first seal portion 13 and the through-holes 16a and 16c on the inner periphery side. In addition, the two beads 15b enclose the through-holes 16b and 16d on the inner periphery side, respectively. In this manner, the bead 15a encloses the through-holes 16a and 16c from the outer periphery side and is configured to be able to seal the through-hole 16a and the through-hole 16c so that the through-hole 16a and the through-hole 16c can communicate with each other via the anode chamber S1. Furthermore, one of the two beads 15b seals and encloses the through-hole 16b and is configured to prevent the through-hole 16b from communicating with the anode chamber S1, and another of the two beads 15b seals and encloses the through-hole 16d and is configured to prevent the through-hole 16d from communicating with the anode chamber S1. Note that the seal portion 15a may be made up of a plurality of beads and, similarly, the seal portion 15b may be made up of a plurality of beads. In this case, the plurality of beads 15a and the plurality of beads 15b are, for example, arranged parallel or substantially parallel to each other with spacing therebetween, respectively.

As shown in Fig. 6, for example, a height of the bead 13 of the first seal portion 13 and heights of the beads 15a and 15b of the third seal portion 15 are the same or substantially the same, and a cross-sectional shape of the bead 13 and cross-sectional shapes of the beads 15a and 15b are the same or substantially the same. Note that the height (hereinafter, referred to as a height h1) of the bead 13 is a dimension from the contact side surface 12 to a tip of the bead 13 in the direction of the axial line x, and the heights (hereinafter, referred to as heights h2) of the beads 15a and 15b are dimensions from the contact side surface 12 to tips of the beads 15a and 15b in the direction of the axial line x, respectively. In addition, the cross-sectional shapes of the beads 13, 15a, and 15b are shapes on a cross-section along a plane perpendicular to an extension direction that is a direction in which the beads 13, 15a, and 15b extend, respectively.

As shown in Figs. 1 and 3 to 6, an annular end portion on the inner periphery side of the contact side surface 12 of the gasket member 10 is the second seal portion 14 that is a portion to contact the end portion 104a of the electrolyte membrane 104. The second seal portion 14 is positioned on an inner periphery side of the through-holes 16a to 16d. In other words, the through-holes 16a to 16d are outside a space enclosed by the second seal portion 14 and are positioned on the outer periphery side relative to the second seal portion 14. The second seal portion 14 spreads to the end portion on the inner periphery side of the contact side surface 12 so as to correspond to the shape of the end portion 104a of the electrolyte membrane 104. Note that, on the contact side surface 12, the second seal portion 14 may be recessed toward the side of the seal side surface 11 relative to other portions and may be configured to form an annular space opened toward the inner periphery side and accommodating the end portion 104a of the electrolyte membrane 104 as described above. In addition, portions other than the second seal portion 14 of the contact side surface 12 of the gasket member 10 are configured to contact portions other than the second seal portion 24 of the contact side surface 22 of the gasket member 20 of the second gasket 3 in the gasket device 1 in the assembled state.

In addition, as shown in Figs. 3 to 7, for example, the gasket member 10 has a recessed portion 17 corresponding to the backup ring 30. The recessed portion 17 is recessed toward the side of the contact side surface 12 on the seal side surface 11. The recessed portion 17 is configured to be able to accommodate the backup ring 30. In addition, for example, the gasket member 10 has a projecting portion 18 that is a portion protruding toward the front-face side on the seal side surface 11. The projecting portion 18 extends annularly and encloses the through-holes 16a to 16d from the outer periphery side, and the recessed portion 17 is formed between the projecting portion 18 and the third seal portion 15. Specifically, for example, the projecting portion 18 extends annularly, extends along the bead 15a with spacing between the projecting portion 18 and the bead 15a on the outer periphery side of the bead 15a excluding a portion where the bead 15a and the bead 15b face each other in a direction along a plane perpendicular to the axial line x and portions in the vicinity of the portion, and extends along the bead 15b with spacing between the projecting portion 18 and the bead 15b so as to enclose the bead 15b from the outer periphery side excluding a portion where the bead 15a and the bead 15b face each other in a direction along a plane perpendicular to the axial line x and portions in the vicinity of the portion. As shown in Fig. 7, the recessed portion 17 is formed between the projecting portion 18 and the bead 15a, between the projecting portion 18 and the bead 15b, and between the bead 15a and the bead 15b.

A height h3 of the projecting portion 18 is set to a predetermined height based on heights h1 and h2 of the beads 13 and 15 of the gasket member 10. Note that as shown in Fig. 6, the height h3 is a dimension from the contact side surface 12 to a tip of the projecting portion 18 in the direction of the axial line x. The height h3 of the projecting portion 18 is set to, for example, a height that causes the beads 13 and 15 of the gasket member 10 to be compressed by a predetermined crush allowance in the cell 100 in the water electrolysis device 4.

In addition, the gasket member 10 has an engaged portion 19 on the seal side surface 11. The engaged portion 19 is configured to be able to engage with an engagement portion 33 included in the backup ring 30. For example, the engaged portion 19 is made up of a protruding portion 19a formed in the projecting portion 18, as shown in Figs. 3 to 7, and projecting towards the front-face side and a recessed portion 19b adjacent to the protruding portion 19a and communicating with the recessed portion 17. The recessed portion 17 is a portion recessed toward the rear-face side in the projecting portion 18 and extends in, for example, an arc shape or a U-shape.

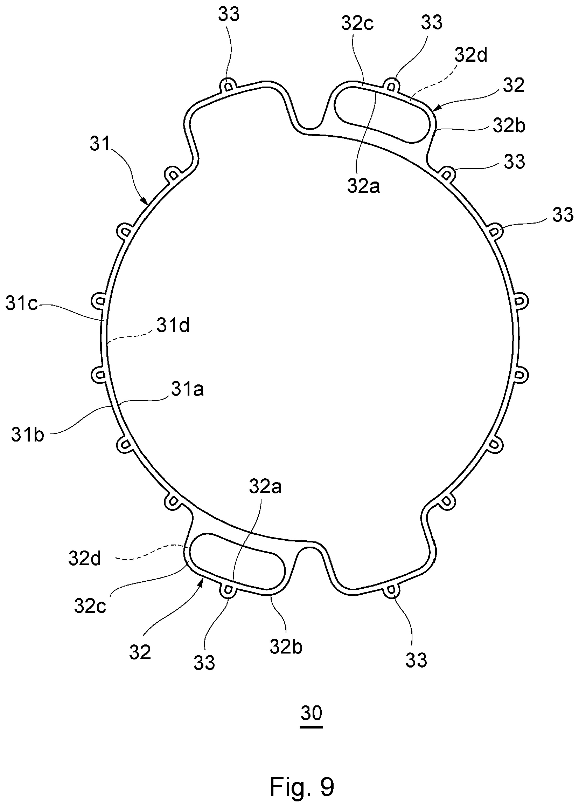

Next, a configuration of the backup ring 30 provided in the first gasket 2 will be described. Fig. 9 is a front view of the backup ring 30.

As described above, the backup ring 30 is an annular member extending so as to be able to contact the third seal portion 15 from an opposite side to a side of a subject to be sealed by the third seal portion 15. For example, the backup ring 30 is made of resin or metal. While the backup ring 30 is preferably formed from a resin material when taking electrical insulation into consideration, the backup ring 30 may also be formed from a metal material if electrical insulation is ensured between the pair of separators 101 and 102 in the cell 100. Examples of the resin material that forms the backup ring 30 include polyphenylene sulfide (PPS) and polyether ether ketone (PEEK). On the other hand, examples of the metal material that forms the backup ring 30 include stainless steel, titanium, and aluminum.

As shown in Figs. 2 to 6 and 9, the backup ring 30 extends along the third seal portion 15 on an opposite side to a side of a subject to be sealed by the third seal portion 15. Specifically, the backup ring 30 is configured to extend to an outer periphery side of one pair of through-holes 16a and 16c and to enclose each of another pair of through-holes 16b and 16d. For example, the backup ring 30 has a single first portion 31 and two second portions 32. The backup ring 30 is an integrated member, and the first portion 31 and each of the two second portions 32 are connected to and integrated with each other. As shown in Fig. 9, the first portion 31 is an annular portion enclosing the bead 15a of the third seal portion 15 from the outer periphery side and the second portions 32 are annular portions enclosing the bead 15b of the third seal portion 15 from the outer periphery side.

For example, as shown in Figs. 2 to 6, the first portion 31 of the backup ring 30 is configured to contact the bead 15a from the outer periphery side in the gasket device 1. Specifically, as shown in Fig. 9, the first portion 31 has an inside surface 31a and an outside surface 31b that are a pair of surfaces that face away from each other and an upper surface 31c and a lower surface 31d that are a pair of surfaces that face away from each other. The upper surface 31c and the lower surface 31d are annular surfaces extending along a plane, respectively. The inside surface 31a and the outside surface 31b extend between the upper surface 31c and the lower surface 31d, respectively, the inside surface 31a is an annular surface facing the inner periphery side, and the outside surface 31b is an annular surface facing the outer periphery side. As shown in Figs. 2 to 6, the first portion 31 is configured to be able to contact the outside surface 15c of the bead 15a. Note that the outside surface 15c is a surface facing the outer periphery side of the bead 15a. Specifically, in the gasket device 1 in which the backup ring 30 is attached to the gasket member 10, the inside surface 31a of the first portion 31 is configured to contact the outside surface 15c of the bead 15a. In the gasket device 1, instead of the entire inside surface 31a of the first portion 31 contacting the entire outside surface 15c of the bead 15a, the inside surface 31a of the first portion 31 may have a portion not contacting the outside surface 15c of the bead 15a.

For example, as shown in Figs. 2 to 6, each of the second portions 32 of the backup ring 30 is configured to contact the bead 15b from the outer side in the gasket device 1. Specifically, as shown in Fig. 9, the second portion 32 has an inside surface 32a, an outside surface 32b, and an upper surface 32c and a lower surface 32d that are a pair of surfaces that face away from each other. The upper surface 32c and the lower surface 32d are annular surfaces extending along a plane, respectively. The inside surface 32a is an annular surface extending between the upper surface 32c and the lower surface 32d and demarcating a through-hole that penetrates between the upper surface 32c and the lower surface 32d on the inner periphery side. In addition, the outside surface 32b is a surface positioned back to back with a part of the inside surface 32a and extends between the upper surface 32c and the lower surface 32d. As shown in Figs. 2 to 6, the second portion 32 is configured to be able to contact the outside surface 15d of the bead 15b. Note that the outside surface 15d is a surface facing the outer periphery side of the bead 15b. Specifically, in the gasket device 1 in which the backup ring 30 is attached to the gasket member 10, the inside surface 32a of the second portion 32 is configured to contact the outside surface 15d of the bead 15b. In the gasket device 1, instead of the entire inside surface 32a of the second portion 32 contacting the entire outside surface 15d of the bead 15b, the inside surface 32a of the second portion 32 may have a portion not contacting the outside surface 15d of the bead 15b.

As shown in Fig. 9, the first portion 31 and the second portions 32 are integrally connected, and at portions where the first portion 31 and the second portions 32 are joined, the outside surface 31b of the first portion 31 is interrupted and connects to the outside surface 32b of the second portions 32. In addition, the upper surface 31c and the lower surface 31d of the first portion 31 and the upper surface 32c and the lower surface 32d of the second portions 32 are connected to each other, respectively.

As described above, the recessed portion 17 of the gasket member 10 is configured to be able to accommodate the backup ring 30, and the backup ring 30 is attached to the gasket member 10 by being accommodated in the recessed portion 17 of the gasket member 10. The lower surface 31d of the first portion 31 and the lower surface 32d of the second portions 32 of the backup ring 30 are configured to contact a bottom surface 17a of the recessed portion 17 when the backup ring 30 is accommodated in the recessed portion 17. Note that the bottom surface 17a of the recessed portion 17 is a portion demarcating a bottom of the recessed portion 17 as shown in Fig. 7 and, for example, extends along a plane perpendicular to the axial line x.

In addition, the backup ring 30 may be configured to contact an inside surface 18a of the projecting portion 18 or configured not to contact the inside surface 18a of the projecting portion 18 when accommodated in the recessed portion 17. Note that as shown in Fig. 7, the inside surface 18a of the projecting portion 18 is a surface facing the inner periphery side of the projecting portion 18 and a surface demarcating a part of the recessed portion 17. In other words, the backup ring 30 may be configured when accommodated in the recessed portion 17 such that the outside surface 31b of the first portion 31 and the outside surface 32b of the second portions 32 contact the inside surface 18a of the projecting portion 18 or configured to face the inside surface 18a of the projecting portion 18 with spacing therebetween.

In addition, as shown in Fig. 9, for example, the backup ring 30 has the engagement portion 33 formed so as to be able to engage with the engaged portion 19 of the gasket member 10. The engagement portion 33 is a portion projecting toward the outer periphery side in the backup ring 30, and one or a plurality of the engagement portions 33 are provided. For example, as shown in Fig. 9, the engagement portion 33 is formed in an arc shape or a U-shape, and projects from the outside surface 31b of the first portion 31 and the outside surface 32b of the second portions 32. As described above, the recessed portion 19b of the engaged portion 19 formed in the projecting portion 18 of the gasket member 10 is configured to be able to accommodate the engagement portion 33, the engagement portion 33 is accommodated in the recessed portion 19b of the engaged portion 19, the engagement portion 33 and the protruding portion 19a of the engaged portion 19 engage with each other, and the engagement portion 33 and the engaged portion 19 engage with each other.

The backup ring 30 is configured so as not to protrude further than the first seal portion 13 and the third seal portion 15 toward the front-face side. Specifically, a height h4 of the backup ring 30 is set lower than the heights h1 and h2 of the beads 13 and 15 of the gasket member 10. In addition, the height h4 of the backup ring 30 is set to a value that causes the first seal portion 13 and the third seal portion 15 to be crushed by a predetermined crush allowance, respectively, in the cell 100. Note that, as shown in Fig. 6, the height h4 is a dimension between the upper surface 31c and the lower surface 31d in the first portion 31 and also a dimension between the upper surface 32c and the lower surface 32d in the second portions 32. The height h4 of the backup ring 30 is, for example, uniform or substantially uniform throughout, and the height h4 at the first portion 31 and the height h4 at the second portions 32 are the same or substantially the same.

The first gasket 2 is configured as described above. The second gasket 3 is the same as the first gasket 2 and shares the same configuration. The only difference between the first gasket 2 and the second gasket 3 is that, as shown in Fig. 1, they are used either to seal the anode chamber S1 or inverted and used to seal the cathode chamber S2 in the cell 100.

As described above, the configuration of the second gasket 3 is the same as the configuration of the first gasket 2 and, as shown in Figs. 1 to 9, the second gasket 3 has the same configuration as the first gasket 2. Note that in Figs. 2, 7, and 8, reference signs for corresponding components of the second gasket 3 are shown in parentheses next to reference signs for components of the first gasket 2.

The second gasket 3 has the gasket member 20 corresponding to the gasket member 10 of the first gasket 2 and the backup ring 30 corresponding to the backup ring 30 of the first gasket 2. As shown in Figs. 1 to 8, the gasket member 20 has the seal side surface 21 and the contact side surface 22 corresponding to the seal side surface 11 and the contact side surface 12 of the gasket member 10, respectively. In addition, the gasket member 20 has a first seal portion 23, a bead 23, a second seal portion 24, a third seal portion 25, a bead 25, seal portions 25a and 25b, beads 25a and 25b, through-holes 26, 26a, 26b, 26c, and 26d, a recessed portion 27, a projecting portion 28, and an engaged portion 29 corresponding to the first seal portion 13, the bead 13, the second seal portion 14, the third seal portion 15, the bead 15, the seal portions 15a and 15b, the beads 15a and 15b, the through-holes 16, 16a, 16b, 16c, and 16d, the recessed portion 17, the projecting portion 18, and the engaged portion 19 of the gasket member 10. Furthermore, the gasket member 20 has an inner periphery end portion 20a, outside surfaces 25c and 25d, a bottom surface 27a, an inside surface 28a, a protruding portion 29a, and a recessed portion 29b corresponding to the inner periphery end portion 10a, the outside surfaces 15c and 15d, the bottom surface 17a, the inside surface 18a, the protruding portion 19a, and the recessed portion 19b of the gasket member 10.

As described above, the second gasket 3 is the same as the first gasket 2 and, consequently, the contact side surface 22 of the gasket member 20 is configured to be able to contact the contact side surface 12 of the gasket member 10 while being aligned or substantially aligned with the contact surface 11 in a contact direction.

The gasket members 10 and 20 have the configuration described above and are integrally formed from the same elastic material, respectively. The elastic material of the gasket members 10 and 20 is, for example, rubber. Specifically, for example, ethylene-propylene rubber (EPM), ethylene-propylene-diene rubber (EPDM), fluorocarbon rubber (FKM), or silicone rubber (VMQ) is used as the elastic material of the gasket members 10 and 20. The gasket members 10 and 20 are made of the elastic material and the gasket members 10 and 20 are capable of flexing. In particular, as the gasket members 10 and 20 become larger, various parts of the gasket members 10 and 20 flex. The description of the gasket members 10 and 20, particularly regarding their shapes, refers to the gasket members 10 and 20 in their undeformed state such as the state of the gasket members 10 and 20 during a design phase including being depicted in design drawings and the like.

Next, an action of the gasket device 1 having the first gasket 2 and the second gasket 3 with the configuration described above will be described. To assemble the cell 100, the first gasket 2 and the second gasket 3 are assembled so as to support the electrolyte membrane 104 therebetween, as shown in Figs. 1 to 6, thereby assembling the gasket device 1 and the membrane assembly 103. Furthermore, as shown in Fig. 1, the assembled gasket device 1 and the membrane assembly 103 are sandwiched between the pair of separators 101 and 102 to assemble the cell 100. Note that the cell 100 in the assembled state shown in Fig. 1 is in a usable state of forming the water electrolysis device 4 in which a plurality of cells 100 are stacked, compressed in a stack direction, and fixed, and the beads 13, 15, 23, and 25 have been compressed by a predetermined crush allowance.

As described above, the first gasket 2 and the second gasket 3 are the same. Therefore, in the gasket device 1 in the assembled state, with respect to each component of the first gasket 2, a component of the second gasket 3 corresponding to a component at a position symmetrical relative to the symmetry plane P in the first gasket 2 aligns or substantially aligns in the direction of the axial line x. As shown in Figs. 1 to 6, in the gasket device 1 in the assembled state, the first gasket 2 and the second gasket 3 face directions opposite to each other in the direction of the axial line x, and the contact side surface 12 of the gasket member 10 and the contact side surface 22 of the gasket member 20 contact each other. Specifically, the entire or substantially the entire contact side surface 12 of the gasket member 10 excluding the second seal portion 14 and the entire or substantially the entire contact side surface 22 of the gasket member 20 excluding the second seal portion 24 contact each other. In addition, as shown in Figs. 1 to 6, in the gasket device 1 in the assembled state, the second seal portion 14 of the contact side surface 12 of the gasket member 10 and the second seal portion 24 of the contact side surface 22 of the gasket member 20 face each other in the direction of the axial line x via the end portion 104a of the electrolyte membrane 104 of the membrane assembly 103. The second seal portion 14 may or may not contact the end portion 104a of the electrolyte membrane 104 and, similarly, the second seal portion 24 may or may not contact the end portion 104a of the electrolyte membrane 104.

As described above, in the gasket member 10, the position of the through-hole 16a and the position of the through-hole 16b are symmetrical or substantially symmetrical to each other relative to the symmetry plane P and, in the gasket member 20, the position of the through-hole 26a and the position of the through-hole 26b are symmetrical or substantially symmetrical to each other relative to the symmetry plane P. Therefore, as shown in Figs. 1, 4, and 5, in the gasket device 1 in the assembled state, the through-hole 26b of the gasket member 20 faces the through-hole 16a of the gasket member 10 in the direction of the axial line x, and the through-hole 16a and the through-hole 26b are communicated with each other. As a result, the through-hole 6a is formed in the gasket device 1. Similarly, as shown in Figs. 1 and 6, in the gasket device 1 in the assembled state, the through-hole 26a of the gasket member 20 faces the through-hole 16b of the gasket member 10 in the direction of the axial line x, and the through-hole 16b and the through-hole 26a are communicated with each other. As a result, the through-hole 6b is formed in the gasket device 1.

Similarly, in the gasket member 10, the through-hole 16c and the through-hole 16d are symmetrical or substantially symmetrical to each other relative to symmetry plane P and, in the gasket member 20, the through-hole 26c and the through-hole 26d are symmetrical or substantially symmetrical to each other relative to the symmetry plane P. Therefore, as shown in Figs. 1, 4, and 5, in the gasket device 1 in the assembled state, the through-hole 26d of the gasket member 20 faces the through-hole 16c of the gasket member 10 in the direction of the axial line x, and the through-hole 16c and the through-hole 26d are communicated with each other. As a result, the through-hole 6c is formed in the gasket device 1. Similarly, as shown in Figs. 1 and 6, in the gasket device 1 in the assembled state, the through-hole 26c of the gasket member 20 faces the through-hole 16d of the gasket member 10 in the direction of the axial line x, and the through-hole 16d and the through-hole 26c are communicated with each other. As a result, the through-hole 6d is formed in the gasket device 1.

In addition, as shown in Figs. 1 to 6, in the first gasket 2, the backup ring 30 is accommodated in the recessed portion 17 of the gasket member 10 and the backup ring 30 is attached to the gasket member 10. Similarly, in the second gasket 3, the backup ring 30 is accommodated in the recessed portion 27 of the gasket member 20 and the backup ring 30 is attached to the gasket member 20. In the first gasket 2, the inside surface 31a of the first portion 31 of the backup ring 30 contacts the outside surface 15c of the bead 15a of the third seal portion 15, and the inside surface 32a of the second portion 32 of the backup ring 30 contacts the outside surface 15d of the bead 15b of the third seal portion 15. Similarly, in the second gasket 3, the inside surface 31a of the first portion 31 of the backup ring 30 contacts the outside surface 25c of the bead 25a of the third seal portion 25, and the inside surface 32a of the second portion 32 of the backup ring 30 contacts the outside surface 25d of the bead 25b of the third seal portion 25.

When the backup ring 30 is accommodated in the recessed portion 17, the engagement portion 33 of the backup ring 30 engages with the engaged portions 19 and 29 of the gasket members 10 and 20. Therefore, the backup ring 30 can tightly fix the backup ring 30 to the gasket members 10 and 20. Note that the backup ring 30 need not have the engagement portion 33 and the gasket members 10 and 20 need not have the engaged portions 19 and 29. In this case, for example, the backup ring 30 may be fixed to the gasket members 10 and 20 by other means such as adhesive bonding. In addition, the backup ring 30 and the gasket members 10 and 20 need not be provided with components to fix one another. Furthermore, the gasket members 10 and 20 need not be provided with the recessed portion 17.

As shown in Fig. 1, the gasket device 1 assembled with the membrane assembly 103 is sandwiched between the separator 101 and the separator 102 to assemble the cell 100. Specifically, the separator 101 is caused to contact the gasket member 10 of the first gasket 2 of the gasket device 1 while facing the seal side surface 11 of the gasket member 10, and the separator 102 is caused to contact the gasket member 20 of the second gasket 3 of the gasket device 1 while facing the seal side surface 21 of the gasket member 20.

In the cell 100 in the assembled state, the separator 101 faces the first gasket 2 and contacts the beads 13 and 15. In addition, the separator 102 faces the second gasket 3 and contacts the beads 23 and 25. In the cell 100 in the assembled state, a force is applied to the separator 101 in a direction toward the separator 102 and a force is applied to the separator 102 in a direction toward the separator 101, causing the gasket members 10 and 20 to be compressed and changing the cell 100 to a usable state.

In the cell 100 in the usable state, the beads 13 and 15 of the gasket member 10 are pressed against the separator 101, the second seal portion 14 of the gasket member 10 is pressed against the end portion 104a of the electrolyte membrane 104, and the anode chamber S1 is sealed. In addition, in the cell 100 in the usable state, the beads 23 and 25 of the gasket member 20 are pressed against the separator 102, the second seal portion 24 of the gasket member 20 is pressed against the end portion 104a of the electrolyte membrane 104, and the cathode chamber S2 is sealed. Communication between the anode chamber S1 and the cathode chamber S2 or, in other words, so-called cross-leakage is prevented by the contact between the second seal portions 14 and 24 and the electrolyte membrane 104. In addition, the portion of the contact side surface 12 of the gasket member 10 excluding the second seal portion 14 and the portion of the contact side surface 22 of the gasket member 20 excluding the second seal portion 24 contact each other, thereby preventing a subject requiring sealing in the anode chamber S1 from escaping to the outside of the cell 100 and also preventing a subject requiring sealing in the cathode chamber S2 from escaping to the outside of the cell 100.

The separator 101 is configured to cause each of the through-holes 6a and 6c to be communicated with the anode chamber S1 in the cell 100 in the usable state, and the separator 102 is configured to cause each of the through-holes 6b and 6d to be communicated with the cathode chamber S2 in the cell 100 in the usable state. For example, the separator 101 is configured to interrupt the contact between the bead 13 and the separator 101 in the vicinity of each of the through-holes 6a and 6c in the cell 100 in the usable state and, similarly, the separator 102 is configured to interrupt the contact between the bead 23 and the separator 102 in the vicinity of each of the through-holes 6b and 6d in the cell 100 in the usable state. Accordingly, the anode chamber S1 is sealed so as to be able to communicate with the through-holes 6a and 6c, and the cathode chamber S2 is sealed so as to be able to communicate with the through-holes 6b and 6d.

When the water electrolysis device 4 is activated, pressure inside the anode chamber S1 becomes high pressure. Therefore, in the gasket device 1, a force directed toward the outer periphery side is applied to the bead 15a of the third seal portion 15 of the gasket member 10 and to the bead 25b of the third seal portion 25 of the gasket member 20. Similarly, when the water electrolysis device 4 is activated, pressure inside the cathode chamber S2 becomes high pressure. Therefore, in the gasket device 1, a force directed toward the outer periphery side is applied to the bead 25a of the third seal portion 25 of the gasket member 20 and to the bead 15b of the third seal portion 15 of the gasket member 10. In recent years, in order to increase the output of the water electrolysis device 4, higher pressure has been applied inside the anode chamber S1 and the cathode chamber S2 and, consequently, greater forces are applied to the beads 15a, 15b, 25a, and 25b of the third seal portions 15 and 25 from the inner periphery side, making the beads more readily deformable. Deformation of the beads leads to a decline in the sealing performance of the beads.

In contrast, in the gasket device 1, in the first gasket 2, the inside surface 31a of the first portion 31 of the backup ring 30 contacts the outside surface 15c of the bead 15a of the third seal portion 15, and the inside surface 32a of the second portion 32 of the backup ring 30 contacts the outside surface 15d of the bead 15b of the third seal portion 15. In addition, in the second gasket 3, the inside surface 31a of the first portion 31 of the backup ring 30 contacts the outside surface 25c of the bead 25a of the third seal portion 25, and the inside surface 32a of the second portion 32 of the backup ring 30 contacts the outside surface 25d of the bead 25b of the third seal portion 25. In this manner, the backup ring 30 supports the beads 15a, 15b, 25a, and 25b from the outer periphery side against forces acting on the beads 15a, 15b, 25a, and 25b from the inner periphery side. Accordingly, the beads 15a, 15b, 25a, and 25b are made less deformable with respect to forces applied from the inner periphery side, thereby preventing a decline in the sealing performance of the beads 15a, 15b, 25a, and 25b caused by the insides of the anode chamber S1 and the cathode chamber S2 reaching high pressure. Therefore, the gasket device 1 allows even higher pressure inside the anode chamber S1 and the cathode chamber S2.

In addition, when the beads 15a, 15b, 25a, and 25b are subjected to forces from the inner periphery side, the beads 15a, 15b, 25a, and 25b are pressed against the inside surface 31a of the first portion 31 and the inside surface 32a of the second portion 32 of the backup ring 30 and are subjected to forces directed toward the inner periphery side from the first portion 31 and the second portion 32. Accordingly, the beads 15a, 15b, 25a, and 25b are pressed firmly by the separators 101 and 102, thereby creating a self-sealing action. In this manner, the self-sealing action also prevents a decline in the sealing performance of the beads 15a, 15b, 25a, and 25b caused by the insides of the anode chamber S1 and the cathode chamber S2 reaching high pressure. Therefore, the gasket device 1 allows even higher pressure inside the anode chamber S1 and the cathode chamber S2.

In addition, the backup ring 30 also acts as a reinforcing member for the gasket members 10 and 20 and enables the gasket members 10 and 20 being readily deformable to maintain a specific shape. Accordingly, handling of the gasket members 10 and 20 can be facilitated, and assembly of the gasket device 1 and assembly of the cell 100 can be simplified.

Furthermore, the backup ring 30 and the gasket members 10 and 20 can tightly fix each other using the engagement between the engagement portion 33 and the engaged portions 19 and 29. For this reason, the backup ring 30 is hardly detached from the gasket members 10 and 20, which also enables handling of the gasket members 10 and 20 to be facilitated, and assembly of the gasket device 1 and assembly of the cell 100 to be simplified.

As described above, in the usable state, the gasket members 10 and 20 are compressed by being sandwiched between the separator 101 and the separator 102. For example, the separators 101 and 102 may be configured to be pressed in directions facing each other so that a surface 101a of the separator 101 contacts the projecting portion 18 of the gasket member 10 and a surface 102a of the separator 102 contacts the projecting portion 28 of the gasket member 20. In this case, by setting the height h3 of the projecting portions 18 and 28 to a height that causes the beads 13 and 15 to be compressed by the crush allowance or substantially by the crush allowance in the usable state, the beads 13 and 15 can be configured to generate desired surface pressure and to exhibit desired sealing performance. In addition, the need to strictly control a clamping load on the cell 100 and the need to strictly control the spacing between the separators 101 and 102 for clamping the cell 100 can be eliminated during the assembly of the water electrolysis device 4. Furthermore, the gasket members 10 and 20 can be readily changed to a state in which the gasket members 10 and 20 exhibit optimal sealing performance. Note that the gasket members 10 and 20 need not include the projecting portion 18.

In the water electrolysis device, a plurality of the cells 100 described above are arranged in series, and the plurality of arranged cells 100 are pressed and fixed such that, in each cell 100, the separator 101 and the separator 102 are pressed in directions facing each other. In addition, only one separator is provided between two adjacent cells 100, and the single separator functions as the separator 101 and the separator 102.

The gasket device 1 has the configuration described above, and the gasket device 1 and the membrane assembly 103 can be integrated when assembling the cell 100. Accordingly, during assembly of the cell 100, handling of the gasket device 1 and the membrane assembly 103 can be facilitated, and assembly of the gasket device 1 and the membrane assembly 103 with the separators 101 and 102 can be simplified.

As described above, according to the gasket 2 of the embodiment of the present invention, a decline in sealing performance caused by the anode chamber S1 and the cathode chamber S2 that are spaces to be sealed reaching high pressure can be suppressed.

Next, a cell structure 5 according to an embodiment of the present invention will be described.

As described above, a cell structure is a component forming a cell that is a smallest constituent unit of a device and is, for example, a component forming a cell of a hydrogen generator, a fuel cell, or the like. As an example, the cell structure according to the embodiment of the present invention is assumed to be a component forming a cell of a water electrolysis device in a hydrogen generator. Specifically, the cell structure 5 comprises a gasket 7 that is an annular member formed from an elastic material and a separator 8 that is an annular member extending along a plane. Hereinafter, regarding the configuration of the cell structure 5, components having the same configuration or similar functions as those of the gasket device 1 described above will be designated by same reference signs and their descriptions omitted, and only differing components will be described.

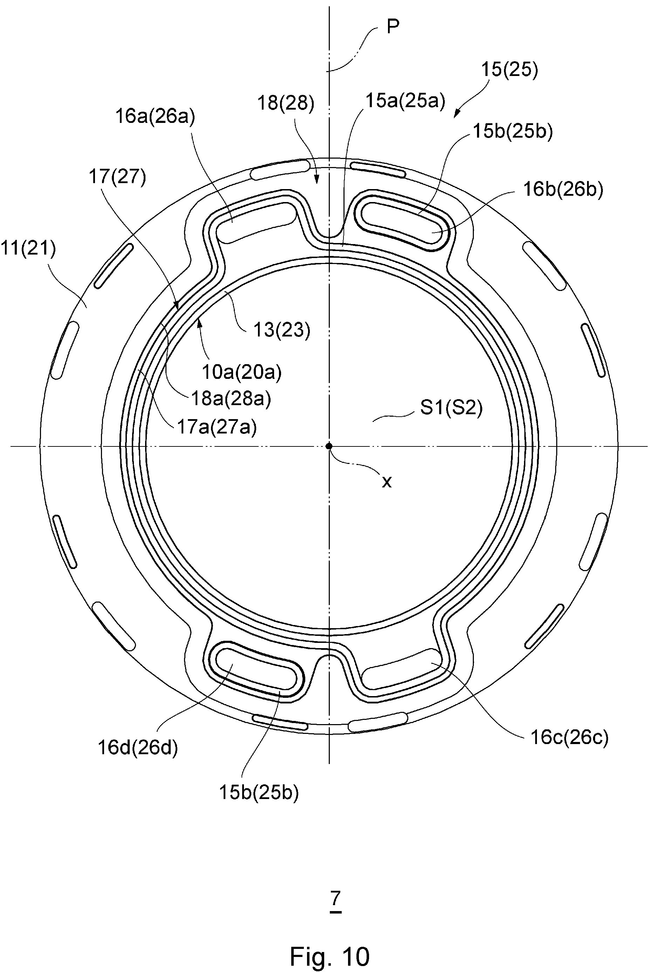

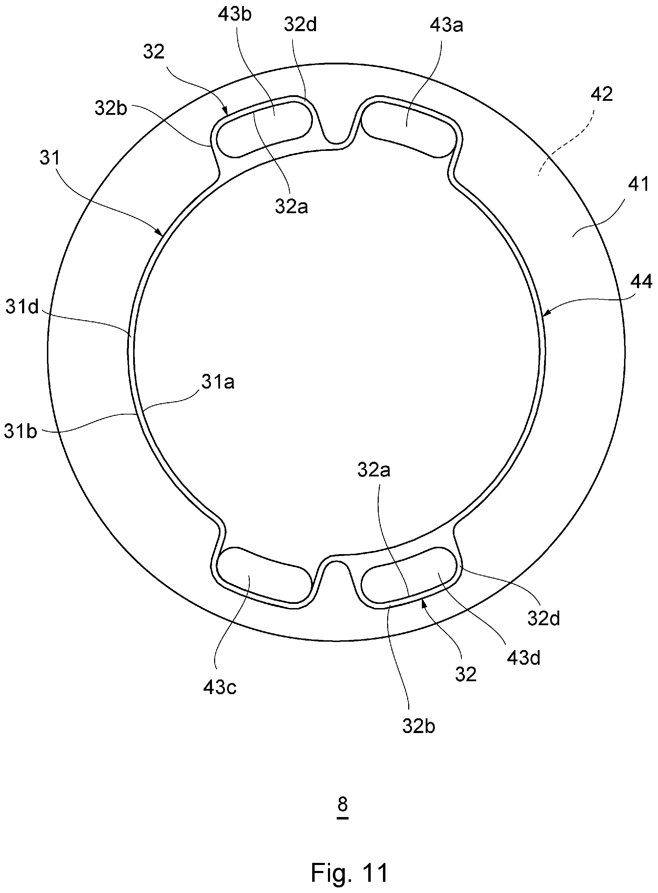

Fig. 10 is a front view of the gasket 7 and Fig. 11 is a front view of the separator 8. As shown in Fig. 10, the gasket 7 is the same as the gasket member 10 described above with the exception of the gasket 7 not having the engagement portion 33. In addition, as shown in Fig. 11, the separator 8 has a first surface 41 and a second surface 42 that are a pair of surfaces facing away from each other, a plurality of through-holes 43a to 43d penetrating between the first surface 41 and the second surface 42 and corresponding to the plurality of through-holes 16a to 16d of the gasket 7, respectively, and a backup ring portion 44. The first seal portion 13 and the third seal portion 15 of the gasket 7 are configured to contact the first surface 41 of the separator 8. The backup ring portion 44 is configured to be able to contact the third seal portion 15 contacting the first surface 41 from an opposite side to a side of a subject to be sealed by the third seal portion 15.

As shown in Fig. 11, the backup ring portion 44 of the separator 8 is the same as the backup ring 30 provided in the gasket device 1 described above with the exception of the backup ring portion 44 not having the engaged portion 19. However, the backup ring portion 44 is integrally provided in the separator 8 and does not have the upper surfaces 31c and 32c. In the separator 8, the backup ring portion 44 is formed on the first surface 41, connected to the first surface 41 on the upper surfaces 31c and 32c, and projects from the first surface 41. The separator 8 has a shape corresponding to the gasket 7 and, for example, an outer shape of the separator 8 is the same or substantially the same as the outer shape of the separators 101 and 102 described above.

The backup ring portion 44 of the separator 8 is configured to be able to be accommodated in the recessed portion 17 of the gasket 7 in a similar manner to the backup ring 30 described above, and when the backup ring portion 44 is accommodated in the recessed portion 17, the first surface 41 of the separator 8 is configured to contact the first seal portion 13 and the third seal portion 15 of the gasket 7. In a similar manner to the backup ring 30 described above, in the backup ring portion 44 accommodated in the recessed portion 17, the inside surface 31a of the first portion 31 of the backup ring portion 44 contacts the outside surface 15c of the bead 15a, and the inside surface 32a of the second portion 32 of the backup ring portion 44 contacts the outside surface 15d of the bead 15b.

A pair of the cell structures 5 form the gasket device 1. Specifically, the gasket 7 of one of the pair of cell structures 5 forms the gasket member 10 described above and the gasket 7 of another of the pair of cell structures 5 forms the gasket member 20 described above. The pair of cell structures 5 is assembled in a similar manner to the gasket device 1 and the separators 101 and 102 described above to form a cell 110. The cell 110 differs from the cell 100 described above in that the pair of cell structures 5 is used.

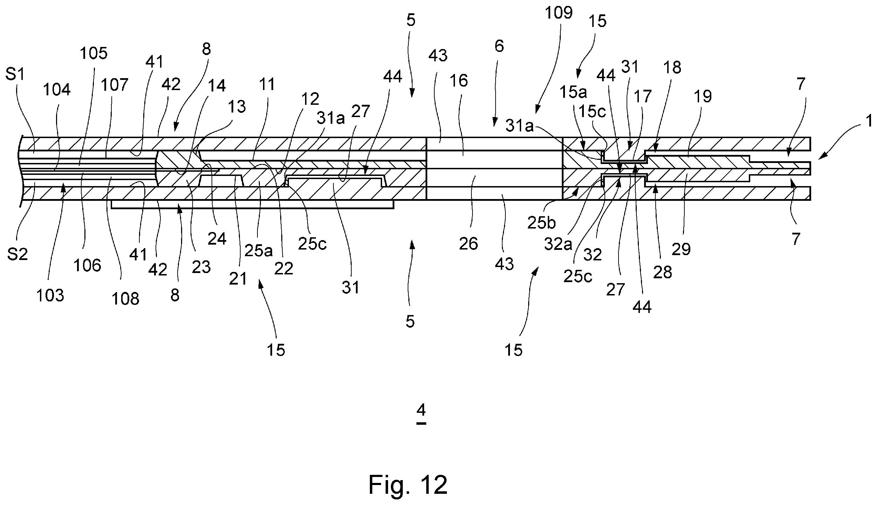

Fig. 12 is a partial sectional view schematically showing the water electrolysis device 4 comprising the cell structure 5. To assemble the cell 110, a pair of gaskets 7 is assembled so as to support the electrolyte membrane 104 between the gaskets 7 as shown in Fig. 12, thereby assembling the gasket device 1 and the membrane assembly 103. Furthermore, as shown in Fig. 12, the assembled gasket device 1 and the membrane assembly 103 are sandwiched between a pair of separators 8 to assemble the cell 110. In the cell 110, the backup ring portion 44 of the separator 8 is accommodated in the recessed portion 17 of the gasket 7. Note that the cell 110 in the assembled state shown in Fig. 12 is in a usable state of forming the water electrolysis device 4 in which a plurality of cells 110 are stacked, compressed in a stack direction, and fixed, and the beads 13, 15, 23, and 25 have been compressed by a predetermined crush allowance.

In the cell 110, the gasket 7 and the backup ring portion 44 of the cell structure 5 also produce a similar action to the gasket 2 and the backup ring 30 described earlier. Therefore, In the cell 110, the gasket 7 and the backup ring portion 44 of the cell structure 5 also produce a similar advantageous effect to the gasket 2 and the backup ring 30 described above.

The separator 8 is configured to cause each of the through-holes 6a and 6c to be communicated with the anode chamber S1 and each of the through-holes 6b and 6d to be communicated with the cathode chamber S2 in the cell 110 in the usable state in a similar manner to the separators 101 and 102 described above. For example, the separator 8 is configured to interrupt the contact between the bead 13 and the separator 8 in the vicinity of each of the through-holes 6a and 6c in the cell 110 in the usable state and, similarly, the separator 8 is configured to interrupt the contact between the bead 23 and the separator 8 in the vicinity of each of the through-holes 6b and 6d in the cell 110 in the usable state. Accordingly, the anode chamber S1 is sealed so as to be able to communicate with the through-holes 6a and 6c, and the cathode chamber S2 is sealed so as to be able to communicate with the through-holes 6b and 6d.

As described above, according to the cell structure 5 of the embodiment of the present invention, a decline in sealing performance caused by the anode chamber S1 and the cathode chamber S2 that are spaces to be sealed reaching high pressure can be suppressed.

Note that the gasket 7 includes various modifications in a similar manner to the gasket members 10 and 20. For example, the gasket 7 need not have the projecting portion 18 and need not have the recessed portion 17.

While the present invention has been described through the embodiment described above, it should be noted that the technical scope of the present invention is not limited to the scope described in the embodiment. It will be apparent to those skilled in the art that various changes and modifications may be made to the above embodiment. It is clear from the description of the scope of claims that such modifications or improvements are also included within the technical scope of the present invention.

It should be noted that the embodiment described above is for facilitating understanding of the present invention and is not intended to limit the interpretation of the present invention. In addition, the embodiment described above is not intended to limit use objects in which the present invention is to be used and the present invention can include everything as use objects. The respective constituent elements included in the embodiment described above and arrangements, materials, conditions, shapes, size, and the like of such constituent elements are not limited to those exemplified and can be modified as appropriate. For example, the present invention includes differences that occur in implementation such as manufacturing tolerances. Furthermore, constituent elements shown in different embodiments can be partially replaced or combined within a technically consistent range. In addition, each component can be selectively combined as appropriate so as to achieve at least a part of the objects and advantageous effects described above.

For example, to the extent that the second gasket 3 constitutes the gasket device 1 and achieves the advantageous effects of the gasket device 1 described above, the second gasket 3 need not be exactly the same as the first gasket 2 and, for example, may be substantially the same.

While the gasket device 1 was described with a water electrolysis device as an object of application as an example in the description presented above, the object of application of the gasket device 1 is not limited to a water electrolysis device. For example, the gasket device 1 can be similarly used in a cell of a fuel cell.

### [Reference Signs List]

1 gasket device, 2 first gasket (gasket), 3 second gasket (gasket), 4 water electrolysis device, 5 cell structure, 6 (6a, 6b, 6c, 6d) through-hole, 7 gasket, 8 separator, 10 gasket member, 10a inner periphery end portion, 11 seal side surface, 12 contact side surface, 13 first seal portion (bead), 14 second seal portion, 15 third seal portion (bead), 15a, 15b seal portion (bead), 15c, 15d outside surface, 16, 16a, 16b, 16c, 16d through-hole, 17 recessed portion, 17a bottom surface, 18 projecting portion, 18a inside surface, 19 engaged portion, 19a protruding portion, 19b recessed portion, 20 gasket member, 20a inner periphery end portion, 21 seal side surface, 22 contact side surface, 23 second seal portion (bead), 24 second seal portion, 25 third seal portion (bead), 25a, 25b seal portion (bead), 25c, 25d outside surface, 26, 26a, 26b, 26c, 26d through-hole, 27 recessed portion, 27a bottom surface, 28 projecting portion, 28a inside surface, 29 engaged portion, 29a protruding portion, 29b recessed portion, 30 backup ring, 31 first portion, 31a inside surface, 31b outside surface, 31c upper surface, 31d lower surface, 32 second portion, 32a inside surface, 32b outside surface, 32c upper surface, 32d lower surface, 33 engagement portion, 41 first surface, 42 second surface, 43a, 43b, 43c, 43d through-hole, 44 backup ring portion, 100 cell, 101, 102 separator, 101a surface, 103 membrane assembly, 104 electrolyte membrane, 104a end portion, 105 anode catalytic layer, 106 cathode catalytic layer, 107, 108 gas diffusion layer, 109 flow path, h1, h2, h3, h4 height, P symmetry plane, S1 anode chamber (space), S2 cathode chamber (space), x axial line

## Claims

1. A gasket for sealing a space between each of a pair of members facing each other and an intermediate member facing each of the pair of members in the facing direction, wherein
the gaskets is configured such that one of the gaskets is inverted and superimposed on another one of the gaskets to seal the space, the gaskets comprising:
a gasket member that is an annular member formed from an elastic material; and
a backup ring that is an annular member,
the gasket member has: a seal side surface and a contact side surface that are a pair of annular surfaces facing away from each other, a plurality of through-holes penetrating between the seal side surface and the contact side surface, a first seal portion and a second seal portion for sealing the space, and a third seal portion formed on the seal side surface on an outer periphery side relative to the first seal portion and the second seal portion for sealing the plurality of through-holes, and
the backup ring is configured to be attachable to the gasket member on the seal side surface so as to be able to contact the third seal portion from an opposite side to a side of a subject to be sealed by the third seal portion.

2. The gasket according to claim 1, wherein
the backup ring extends along the third seal portion on the opposite side.

3. The gasket according to claim 1, wherein
the plurality of through-holes of the gasket member include one pair of the through-holes and another pair of the through-holes, and
the backup ring is configured to extend to an outer periphery side of the one pair of through-holes and to enclose each of the other pair of through-holes.

4. The gasket according to claim 1, wherein
the backup ring has an engagement portion,
the gasket member has an engaged portion on the seal side surface, and
the engagement portion of the backup ring and the engaged portion of the gasket member are configured to be engageable with each other.

5. The gasket according to claim 1, wherein
the gasket member has a recessed portion corresponding to the backup ring, and
the recessed portion is recessed toward the contact side surface on the seal side surface.

6. The gasket according to claim 5, wherein
the gasket member has a projecting portion on the seal side surface that is a portion protruding in a direction in which the seal side surface faces,
the projecting portion extends annularly so as to enclose the plurality of through-holes from an outer periphery side, and
the recessed portion is formed between the projecting portion and the third seal portion.

7. The gasket according to claim 1, wherein
the backup ring is made of resin or metal.

8. The gasket according to claim 1, wherein
the backup ring is configured so as not to protrude further than the first seal portion and the third seal portion in the direction in which the seal side surface faces.

9. The gasket according to claim 1, wherein
the plurality of through-holes of the gasket member include one pair of the through-holes and another pair of the through-holes, and
the third seal portion has a seal portion extending annularly to enclose the one pair of the through-holes from an outer periphery side and a seal portion extending annularly to enclose each of the other pair of the through-holes.

10. A cell structure, comprising:
a gasket that is an annular member formed from an elastic material; and
a separator that is a member extending along a plane, wherein
the gasket has: a seal side surface and a contact side surface that are a pair of annular surfaces facing away from each other, a plurality of through-holes penetrating between the seal side surface and the contact side surface, a first seal portion and a second seal portion for sealing the space, and a third seal portion formed on the seal side surface on an outer periphery side relative to the first seal portion and the second seal portion for sealing the plurality of through-holes,
the separator has: a first surface and a second surface that are a pair of surfaces facing away from each other, a plurality of through-holes corresponding to each of the plurality of through-holes of the gasket and penetrating between the first surface and the second surface, and a backup ring portion,
the first seal portion and the third seal portion of the gasket are configured to contact the first surface of the separator, and
the backup ring portion is configured so as to be able to contact the third seal portion contacting the first surface from an opposite side to a side of a subject to be sealed by the third seal portion.

11. The cell structure according to claim 10, wherein
the backup ring portion is configured to extend along the third seal portion contacting the first surface on the opposite side.

12. The cell structure according to claim 10, wherein
the plurality of through-holes of the separator include one pair of the through-holes and another pair of the through-holes, and
the backup ring portion is configured to extend to an outer periphery side of the one pair of through-holes and to enclose each of the other pair of through-holes.

13. The cell structure according to claim 10, wherein
the gasket has a recessed portion configured to be able to accommodate the backup ring portion, and
the recessed portion is recessed toward the contact side surface on the seal side surface.

14. The cell structure according to claim 13, wherein
the gasket has a projecting portion on the seal side surface that is a portion protruding in a direction in which the seal side surface faces,
the projecting portion extends annularly so as to enclose the plurality of through-holes from an outer periphery side, and
the recessed portion is formed between the projecting portion and the third seal portion.

15. The cell structure according to claim 10, wherein
the plurality of through-holes of the gasket include one pair of the through-holes and another pair of the through-holes, and
the third seal portion has a seal portion extending annularly to enclose the one pair of the through-holes from an outer periphery side and a seal portion extending annularly to enclose each of the other pair of the through-holes.

16. The cell structure according to claim 10, wherein
the plurality of through-holes of the separator include one pair of the through-holes and another pair of the through-holes, and
the first surface is configured to enable the one pair of the through-holes to communicate with each other on an inner side relative to a portion where the third seal portion contacts.
